# EUROPEAN PATENT SPECIFICATION

(11) **EP 3 401 368 B1**
(45) Date of publication and mention of the grant of the patent: **21.08.2024**
(21) Application number: 17736017.9
(22) Date of filing: 06.01.2017
(51) Int. Cl.: C09C 3/10, C09D 11/17, C09C 1/36, C09C 1/48

(54) **MICROCAPSULE PIGMENT AND WATER-BASED INK COMPOSITION FOR WRITING UTENSIL**
MIKROKAPSELPIGMENT UND WASSERBASIERTE TINTENZUSAMMENSETZUNG FÜR SCHREIBUTENSILIEN
PIGMENT EN MICROCAPSULE ET COMPOSITION D'ENCRE À BASE D'EAU POUR USTENSILE D'ÉCRITURE

(30) Priority: 06.01.2016 JP 2016001279; 06.01.2016 JP 2016001280
(43) Date of publication of application: 14.11.2018
(73) Proprietor: Mitsubishi Pencil Company, Limited, Tokyo 140-8537 (JP)
(72) Inventor: ICHIKAWA, Shuji, Yokohama-shi Kanagawa 221-8550 (JP); OGURA, Kousuke, Yokohama-shi Kanagawa 221-8550 (JP)
(74) Representative: Vossius & Partner Patentanwälte Rechtsanwälte mbB
(86) International application number: PCT/JP2017/000251
(87) International publication number: WO 2017/119480

(56) References cited:
- EP-A1- 1 837 073
- EP-B1- 1 837 073
- JP-A- 2000 265 105
- JP-A- 2001 106 957
- JP-A- 2006 028 370
- JP-A- H09 208 871
- JP-A- H10 292 146
- JP-A- H10 292 146
- JP-A- H10 330 673
- DATABASE WPI Week 200138, Derwent World Patents Index; AN 2001-363876, XP002791775
- DATABASE WPI Week 199742, Derwent World Patents Index; AN 1997-454118, XP002791776

## Description

### Technical Field

The present invention relates to a microcapsule pigment obtained by microcapsulating a pigment as set out in claim 1
and an aqueous ink composition for writing instruments prepared by using the same. More specifically, the present invention relates to a microcapsule pigment which makes it easy to be improved in dispersibility and which makes it possible to control a specific gravity and a particle diameter as desired, and an aqueous ink composition for writing instruments prepared by using the same.

### Background Art

In general, it is difficult to maintain a dispersion stability of a pigment having a large specific gravity such as titanium oxide in a dispersion medium. Usually, a dispersant is used in the system described above, and the dispersant is optimally selected for every kind of a pigment and a dispersion medium. Also, a pigment has an inherent particle diameter, and therefore it is difficult to control the particle diameter thereof as desired.

A microcapsule pigment which is improved in dispersibility by microcapsulating titanium oxide having a large specific gravity and an aqueous ink composition for writing instruments prepared by using the same have so far been known.

Known are, for example. 1) an aqueous white ink composition for a ballpoint pen comprising at least a microcapsule pigment involving titanium oxide, water and a water-soluble organic solvent, wherein the microcapsule pigment described above involves a colored medium obtained by dispersing titanium oxide in an oil-based medium containing an oil-soluble resin and/or a non-aqueous dispersant in a homogeneous state (refer to, for example, patent document 1), 2) an ink composition for writing instruments comprising masking particles and microcapsule particles in which a dispersion prepared by dispersing a structural viscosityimparting agent in a solvent is enclosed (refer to, for example, patent document 2), and 3) a composite dye having a microcapsule form comprising a polymer matrix of a crosslinked polyurethane type obtained by interfacial polycondensation, a polyurea and/or a polyurethane/polyurea type, and a pigment, wherein the polymer matrix described above contains 10 to 80% by weight of the pigment based on the weight of the polymer matrix (refer to, for example, patent document 3).
Patent document 4 describes a specific ink which contains 2-30 wt.% of microcapsules having an average particle diameter of 0.1-10 um and encapsulating a coloring material comprising a colorant selected from oil-soluble dyes, disperse pigments and pigments, or a coloring material obtained by dispersing or dissolving the colorant in an oily solvent, 0.1-15 wt.% of a resin, 0.5-15 wt.% of an erasabilityimparting agent, and water.
Patent document 5 relates to a particular coloring agent for a water-based ball point pen ink composition, which is used as a microcapsuled pigment prepared by allowing the homogeneous dispersion of the pigments in the oily medium to be enclosed into the shell body made of a wall film-forming substance.
Patent document 6 concerns a type of ink which comprises a waterbase medium or an organic solvent-base medium and microcapsules dispersed therein.

However, the microcapsule pigments and the aqueous ink compositions for writing instruments prepared by using the same which are prepared in patent documents described above are still inferior in dispersibility and the like in a certain case, and the microcapsule pigments and the aqueous ink compositions for writing instruments prepared by using the same which are further improved in dispersibility and which make it possible to further control a specific gravity and a particle diameter as desired are intensely desired still to be provided.

### Conventional Art Documents

### Patent documents

Patent document 1: Japanese Patent Application Laid-Open No. 2000-265105 (claims, examples and others)
Patent document 2: Japanese Patent Application Laid-Open No. 2006-28370 (claims, examples and others)
Patent document 3: Japanese Patent Application Laid-Open No. 2007-254744 (claims, examples and others)
Patent document 4: JP H10 292146
Patent document 5: JP 2001-106957
Patent document 6: JP H09 208871

### DISCLOSURE OF THE INVENTION

In light of problems and present situations on the conventional arts described above, the present invention intends to solve problems and present situations, and an object thereof is to provide a microcapsule pigment, though it is a microcapsule pigment obtained by microcapsulating a pigment having a large specific gravity such as titanium oxide and carbon black having a little difficulty in dispersibility, which makes it easier to be improved in dispersibility and which makes it possible to control a specific gravity and a particle diameter thereof as desired, and an aqueous ink composition for writing instruments prepared by using the same.

In light of the conventional problems described above and the like, intense researches repeated by the present inventors have resulted in finding that a microcapsule pigment and an aqueous ink composition for writing instruments prepared by using the same which meet the object described above are obtained by using a microcapsule pigment involving at least a pigment and a poorly water-soluble medium having a specific gravity of less than a specific value at 20°C, and thus the present invention has been come to complete.

That is, the present invention is as defined in the claims.

According to the present invention, provided are a microcapsule pigment, though it is a microcapsule pigment obtained by microcapsulating a pigment having a large specific gravity such as titanium oxide and carbon black having a little difficulty in dispersibility, which makes it easier to be improved in dispersibility and which makes it possible to control a specific gravity and a particle diameter as desired, and an aqueous ink composition for writing instruments prepared by using the same.
The microcapsule pigment is as defined in claim 1.

### Embodiment for Carrying Out the Invention

The respective embodiments of the microcapsule pigment and the aqueous ink composition for writing instruments according to the present invention shall be explained below in detail by every embodiment.

### [Microcapsule pigment]

The microcapsule pigment of the present invention is characterized by the features set out in claim 1.

### <Pigment>

The kind of the pigment used for the microcapsule pigment of the present invention shall not specifically be restricted, and capable of being used are optional pigments selected from inorganic and organic pigments which are conventionally used for thermosensitive recording materials, ink compositions for writing instruments, ink compositions for stamps, ink compositions for ink jet, ink compositions for printing, and the like.

The inorganic pigments such as carbon blacks, titanium oxide, zinc oxide, iron oxide, chromium oxide, and ultramarine blue are illustrated.

Also, the organic pigments such as azo lakes, insoluble azo pigments, chelate azo pigments, phthalocyanine pigments, perylene and perinone pigments, anthraquinone pigments, quinacridone pigments, dye lakes, nitro pigments, and nitroso pigments are illustrated.

Carbon blacks, phthalocyanine pigments, quinacridone pigments, and pigments having a large specific gravity such as titanium oxide and zinc oxide, are preferably used from the viewpoints of making it easier to improve dispersibility than dispersibility of the original materials (pigments) and making it possible to control a specific gravity and a particle diameter as desired.

### <Poorly water-soluble medium>

The poorly water-soluble medium having a specific gravity of less than 1 at 20°C in the present invention is an aliphatic carboxyate ester.
The term "poorly water-soluble medium" is referred to as a medium having solubility of 0.1 mg or less in 100 ml toward water.

The usable poorly water-soluble medium having a specific gravity of less than 1 at 20°C includes, for example, alkylphenols such as ortho-secondary-butylphenols, alkylaryls such as dodecylbenzene, aliphatic carboxylate esters including alkyl saturated or unsaturated carboxylate esters such as octyl oleate, isopropyl myristate, isopropyl palmitate, myristyl myristate, stearyl stearate, and isopropyl oleate, aliphatic dicarboxylate diesters including dialkyl dicarboxylate esters such as dioctyl adipate, phosphate triesters including trialkyl phosphates such as tributyl phosphate, benzoate alkyl esters such as butyl benzoate, aromatic carboxylate esters including dialkyl phthalate esters such as ditridecyl phthalate, ketones such as diisobutyl ketone.

The medium comprising the above organic solvents may be used alone or in a mixture of two or more kinds thereof in a suitable ratio.

In the present invention, the medium having the physical properties described above is an aliphatic carboxylate ester from the viewpoint of enhancing further dispersibility of the pigment, and the medium is more preferably monovalent alcohol ester represented by the following Formula (I):

R₁COOR₂ (I)

wherein in Formula (I) described above, R₁ is a linear or branched alkyl group or alkenyl group having 4 to 21 carbon atoms, and R₂ is a linear or branched alkyl group or alkenyl group having 1 to 21 carbon atoms.

Capable of being listed as the aliphatic carboxylate ester represented by Formula (I) described above are, for example, methyl laurate (specific gravity: 0.87), myristyl myristate (specific gravity: 0.84), octyldodecyl myristate (specific gravity: 0.86), 2-ethylhexyl palmitate (specific gravity: 0.86), stearyl stearate (specific gravity: 0.83), butyl stearate (specific gravity: 0.86), isopropyl palmitate (specific gravity: 0.85), isopropyl myristate (specific gravity: 0.85), methyl stearate (specific gravity: 0.84), isobutyl oleate (specific gravity: 0.86), and the like which are obtained from fatty acids such as lauric acid (number of carbon atoms: 12), myristic acid (number of carbon atoms: 14), palmitic acid (number of carbon atoms: 16), stearic acid (number of carbon atoms: 18), and arachidic acid (number of carbon atoms: 20), and alcohols such as methyl alcohol (number of carbon atoms: 1), isopropyl alcohol (number of carbon atoms: 3), isobutyl alcohol (number of carbon atoms: 4), myristyl alcohol (number of carbon atoms: 14), cetyl alcohol (number of carbon atoms: 16), stearyl alcohol (number of carbon atoms: 18), and eicosanyl alcohol (number of carbon atoms: 20). The media (monovalent alcohol esters) described above have a specific gravity of 0.8 to less than 1 and solubility of 0.05 mg or less in 100 ml of water. The poorly water-soluble media having a specific gravity of exceeding 1 at 20°C cannot exert the effects of the present invention.

If the aliphatic carboxylate esters represented by Formula (I) described above are used as the medium having the physical properties described above, the microcapsule pigment tends to be sharp in a particle size distribution (Mv/Mn) and is enhanced in a color developability. Further, the pigment is oriented on the outside of the microcapsule particle to result in making the color intenser.

The term Mv/Mn is used as the index of a particle size distribution, wherein Mv is a volume average particle diameter, and Mn is a number average particle diameter. It is shown in the present invention (including examples described alter) that the closer the value of the particle size distribution (Mv/Mn) of the microcapsule pigment comes to 1, the higher monodispersibility of the pigment is. The volume average particle diameter (Mv) and the number average particle diameter (Mn) are measured by means of a particle size distribution analyzer HRA9320-X100 (manufactured by Nikkiso Co., Ltd.) to calculate the particle size distribution from the volume average particle diameter (Mv)/the number average particle diameter (Mn).

The microcapsule pigment of the present invention involves at least the pigment described above and the poorly water-soluble medium having a specific gravity of less than 1 at 20°C, and the microcapsule pigment is obtainable by
microcapsulating at least the pigment described above and the poorly water-soluble medium having a specific gravity of less than 1 at 20°C so that the prescribed volume average particle diameter is achieved, to be specific, involving the pigment and the medium in a shell layer (shell body) constituted from a wall membrane-forming substance (wall material).

The microcapsulation method such as an interfacial polymerization method, an interfacial polycondensation method, an in situ polymerization method, an in-liquid hardening coating method, a phase separation method from an aqueous solution, a phase separation method from an organic solvent, a melt dispersion cooling method, an in-air suspending coating method, and a spray drying method are illustrated.

The shell component constituting the microcapsule pigment is preferably a thermosetting resin such as an epoxy resin, urethane, urea and ureaurethane from the viewpoints of an easy manufacturability and a quality, and the resin is particularly preferably urethane, urea or ureaurethane from the viewpoints of making it possible to increase the amounts of the components involved, less limitation in the kind of the components involved and an excellent redispersibility.

The urethane (polyurethane resin), the urea (polyurea resin) or the ureaurethane (polyurea resin/polyurethane resin) used for forming the shell layer are formed by reaction of an isocyanate component with an amine component or an alcohol component. Also, the epoxy resin used for forming the shell layer is formed by reaction with a curing agent such as an amine component.

The isocyanate component which can be used such as 2,4-tolylenediisocyanate, 2,6-tolylenediisocyanate, diphenylmethanediisocyanate, polymeric diphenylmethanediisocyanate, hydrogenated diphenylmethanediisocyanate, 1,5-naphthalenediisocyanate, 3,3'-dimethyldiphenyl-4,4' -diisocyanate, hexamethylenediisocyanate, isophoronediisocyanate, m-phenylenediisocyanate, p-phenylenediisocyanate, transcyclohexane-1,4-diisocyanate, diphenyletherdiisocyanate, xylylenediisocyanate, hydrogenated xylylenediisocyanate, 2,6-diisocyanate capronic acid, tetramethyl-m-xylylenediisocyanate, tetramethyl-p-xylylenediisocyanate, trimethylhexamethylenediisocyanate, triphenylmethanetriisocyanate, tris(isocyanatephenyl) thiophosphate, isocyanatealkyl 2,6-diisocyanate capronate, 1,6,11-undecanetriisocyanate, 1,8-diisocyanate-4-isocyanatemethyloctane, 1,3,6-hexamethylenetriisocyanate, and bicycloheptanetriisocyanate are illustrated.

Also, the isocyanate component includes diisocyanates such as m-phenylenediisocyanate, p-phenylenediisocyanate, 2,6-tolylenediisocyanate, 2,4-tolylenediisocyanate, naphthalene-1,4-diisocyanate, diphenylmethane-4,4'-diisocyanate, 3,3' -dimethoxy-4,4' -biphenyl-diisocyanate, 3,3'-dimethylphenylmethane-4,4'-diisocyanate, xylylene-1,4-diisocyanate, 4,4' -diphenylpropanediisocyanate, trimethylenediisocyanate, hexamethylenediisocyanate, propylene-1,2-diisocyanate, butylene-1,2-diisocyanate, cyclohexylene-1,2-diisocyanate, and cyclohexylene-1,4-diisocyanate, triisocyanates such as 4,4',4"-triphenylmethanetriisocyanate, and toluene-2,4,6-triisocyanate, tetraisocyanates such as 4,4' -dimethyldiphenylmethane-2,2',5,5' -tetraisocyanate, isocyanate pre-polymers such as adducts of hexamethylenediisocyanate and trimethylolpropane, adducts of 2,4-tolylenediisocyanate and trimethylolpropane, adducts of xylylenediisocyanate and trimethylolpropane, and adducts of tolylenediisocyanate and hexanetriol. The isocyanate components described above may be used alone or in a mixture.

The amine component which can be used includes, to be specific, aliphatic amines such as ethylenediamine, hexamethylenediamine, diaminocyclohexane, piperazine, diethylenetriamine, triethylenetetramine, tetraethylenepentamine, iminobispropylamine, diaminoethyl ether, 1,4-diaminobutane, pentamethylenediamine, 2-methylpiperazine, 2,5-dimethylpiperazine, 2-hydroxytrimethylenediamine, diethylaminopropylamine, diaminopropylamine, diaminopropane, 2-methylpentamethylenediamine, and xylylenediamine, m-phenylenediamine, triaminobenzene, 3,5-tolylenediamine, diaminodiphenylamine, diaminonaphthalene, t-butyltoluenediamine, diethyltoluenediamine, diaminophenol, and the like. Among amines, the aromatic amines such as phenylenediamine, diaminophenol, and triaminobenzene are preferred.

The alcohol component which can be used includes, to be specific, polyols having two or more hydroxyl groups, such as ethylene glycol, 1,3-propanediol, 1,4-butanediol, 1,5-pentanediol, 1,6-hexanediol, glycerin, catechol, resorcinol, and hydroquinone. The alcohol components described above may be used alone or in a mixture.

The shell layer can be formed by urethane, urea or ureaurethane described above by, for example, 1) subjecting at least one monomer component of the urethane, the urea and the ureaurethane to interfacial polymerization in the poorly water-soluble medium having the property described above in which the pigment component is dispersed, or 2) a production method comprising an emulsifying step in which an oil component (oil phase) containing an isocyanate component is dispersed in an aqueous solvent (aqueous phase) to prepare an emulsion and an interfacial polymerization step in which at least one of an amine component and an alcohol component is added to the emulsion to carry out interfacial polymerization.

In the production method of 2) described above, a solvent having a low boiling point can be used in preparation of the emulsion. Solvents having a boiling point of 100°C or lower can be used as the solvent having a low boiling point, and capable of being listed are, for example, n-pentane, methylene chloride, ethylene chloride, carbon disulfide, acetone, methyl acetate, ethyl acetate, chloroform, methyl alcohol, ethyl alcohol, tetrahydrofuran, n-hexane, carbon tetrachloride, methyl ethyl ketone, benzene, ethyl ether, petroleum ether, and the like. The solvents may be used alone or in a mixture.

On the other hand, a protective colloid may be added in advance to the aqueous phase used for emulsifying the oil phase described above. Water-soluble polymers can be used as the protective colloid, and water-soluble polymers can suitably be selected from publicly known anionic polymers, nonionic polymers and amphoteric polymers. Polyvinyl alcohol, gelatin and cellulose base high molecular compounds are particularly preferably added.

Also, a surfactant may be added to the aqueous phase. Those suitably selected from anionic or nonionic surfactants which are prevented from being reacted with the protective colloid described above to cause precipitation and aggregation can be used as the surfactant. Capable of being listed as the preferred surfactant are sodium alkylbenzenesulfonate (for example, sodium laurylsulfate), dioctyl sodium sulfosuccinate, polyalkylene glycol (for example, polyoxyethylene nonylphenyl ether), and the like.

The oil phase prepared in the manner described above is added to the aqueous phase to emulsify oil and aqueous phases by using a mechanical force, and then the temperature of the system is elevated, if necessary, to thereby bring about interfacial polymerization on the interface of the oil droplets to turn the emulsion into particles. Also, the solvent can be removed simultaneously or after finishing the interfacial polymerization reaction. After carrying out the interfacial polymerization reaction and removing the solvent, the capsule particles are obtained by separating from the aqueous phase, washing and then drying.

The epoxy resin used for formation of the shell layer is formed by reaction with the curing agent such as the amine component, and the epoxy resin can be formed by using the respective microcapsulation methods described above, for example, the interfacial polymerization method.

Epoxy resins having two or more epoxy groups in a molecule which are usually used can be used as the epoxy resin without being restricted by a molecular weight, a molecular structure and the like. Capable of being used are, for example, aromatic epoxy resins including bisphenol A type epoxy resins such as bisphenol A diglycidyl ether type epoxy resins, bisphenol F type epoxy resins, novolac type epoxy resins, cresol novolac type epoxy resins, biphenyl type epoxy resins, and the like, naphthalene type multifunctional epoxy resins, glycidyl ether type epoxy resins of polycarboxylate, glycidyl ester type epoxy resins of polycarboxylate, alicyclic epoxy resins obtained by epoxidizing cyclohexane derivatives and the like, such as cyclohexane polyether type epoxy resins, and hydrogenated bisphenol A type epoxy resins, alicyclic epoxy resins such as dicyclopentadiene type epoxy resins. Epoxy resins may be used alone or in a mixture.

In the present invention, the microcapsule pigment involving at least the pigment and the poorly water-soluble medium having a specific gravity of less than 1 at 20°C is obtained by formation of the shell layer by the respective forming means described above.

In the present invention, contents of the pigment and the poorly water-soluble medium having a specific gravity of less than 1 at 20°C are varied from the viewpoints of controlling dispersibility as desired, a specific gravity and a particle size and a color developability. A content of the pigment is preferably 5 to 50% by mass based on a total amount of the microcapsule pigment, and a content of the poorly water-soluble medium having the physical property described above is preferably 1 to 50% by mass. The respective contents can be controlled to the ranges described above by controlling the respective materials (the shell layer-forming material components, the pigments, the media and the like) used in microcapsulation in the suitable ranges and carrying out the polymerization.

Also, in the present invention, the microcapsule pigment involving at least the pigment and the poorly water-soluble medium having a specific gravity of less than 1 at 20°C can be controlled to a prescribed volume average particle diameter, for example, an average particle diameter of 0.1 to 100 µm by every use according to the uses of the microcapsule pigment (thermosensitive recording materials, inks for writing instruments, inks for stamps, inks for ink jet, inks for printing and the like). Preferably, the range of 0.5 to 20 µm satisfies a practicality in the respective uses described above.

Further, a secondary resin coating film can be provided, if necessary, on the surface of the microcapsule according to the objects to impart durability to the microcapsule or modify the surface characteristics thereof for practical use.

The microcapsule pigment of the present invention is a little different in a constitution from conventional microcapsule pigments. That is, conventional microcapsule pigments have different compositions in a core and a shell, and therefore a distinct interface is present between both. On the other hand, the microcapsule pigment of the present invention is constituted so that the component constituting the shell is reduced in a density toward the center, and the constitution makes the pigment involved easier to align toward the outside of the capsule and provides the microcapsule pigment with an intense color. In the present invention (including examples described later), the constitution in which the shell is reduced in a density toward the center is confirmed by observing the cross-sectional shape of the microcapsule pigment under an electron microscope and the like, but the method shall not be restricted to the above method.

Also, if the aliphatic carboxylate ester represented by Formula (I) described above is used as the poorly water-soluble medium having a specific gravity of less than 1 at 20°C, the microcapsule pigment tends to be sharp in a particle size distribution (Mv/Mn) and is enhanced in a color developability. Further, the pigment is aligned on the outside of the microcapsule particles, and the pigment is present in the vicinity of the surface of the microcapsule particles, so that the microcapsule particles can be provided with an intenser color. This particle size distribution (Mv/Mn) is preferably 1 to 10, more preferably 1 to 8. If Mv/Mn exceeds 10, a gap part between the particles is reduced, whereby a diffused reflection of light is decreased, and the color developability such as the brightness and the masking property results in being lowered.

Also, selection of the poorly water-soluble medium, controlling the polymerization conditions and selection of the components constituting the shell make it possible to make the particle shape spherical and form concave and convex on the surface. For example, particles in which titanium oxide is involved and in which concave and convex are formed on the surface are raised in whiteness due to a diffused reflection effect of light caused by the concave and convex. On the contrary, in the case of particles involving the pigment other than white one, the particles can be enhanced in a color developability by making the particles spherical.
In the present invention, the particle shape of the microcapsule pigment is spherical and is smooth or concave and convex on the surface.

The microcapsule pigment of the present invention is a microcapsule pigment, though it is a microcapsule pigment obtained by microcapsulating a pigment having a large specific gravity such as titanium oxide and carbon black having a little difficulty in dispersibility, which makes it easier to be improved in dispersibility and which makes it possible to control a specific gravity and a particle diameter as desired. Accordingly, the microcapsule pigment can suitably be used, for example, as a colorant used for thermosensitive recording materials, inks for writing instruments, inks for stamps, inks for ink jet, inks for printing and the like, and thermosensitive recording materials, ink compositions for writing instruments, ink compositions for stamps, ink compositions for ink jet, ink compositions for printing and the like can be obtained by suitably combining and controlling publicly known respective blend components for every use.

In the case of, for example, the ink compositions for writing instruments, the microcapsule pigment having the constitution described above, solvents (aqueous solvents and oily solvents) and additive components for writing instruments are added in suitable contents to prepare mixtures, and the mixtures can suitably be used as ink compositions for writing instruments, oily ink compositions and gel ink compositions for ballpoint pens, marking pens and the like.

Also, in the case of the ink compositions for printing, the microcapsule pigment having the constitution described above, solvents (aqueous solvents and oily solvents) and additive components for printing inks are added in suitable contents to prepare mixtures, and the mixtures can suitably be used as ink compositions for relief printing, intaglio printing, lithographic printing, stencil printing and the like.

Further, because the microcapsule pigment obtained is constituted so that the component constituting the shell is reduced in a density toward the center, the microcapsule pigment having an intense color can be obtained, and because aliphatic carboxylate ester is used as the poorly water-soluble medium having a specific gravity of less than 1 at 20°C, the microcapsule pigment tends to be sharp in a particle size distribution (Mv/Mn) and is enhanced in a color developability. Further, the pigment is aligned on the outside of the microcapsule particles, and the pigment is present in the vicinity of the surface of the microcapsule particles, so that the microcapsule particles can be provided with an intenser color. Further, making the particle shape spherical and forming concave and convex on the surface make it possible to further enhance the color developability and further elevate the whiteness.

### <Aqueous ink composition for writing instruments>

The aqueous ink composition for writing instruments according to the present invention is characterized by containing the microcapsule pigment having the constitution described above and used as, for example, an ink composition for writing instruments such as an aqueous ink ballpoint pen.

In the present invention, a content of the microcapsule pigment having the characteristic described above is preferably 5 to 50%, more preferably 5 to 30% based on the aqueous ink composition for writing instruments (total amount).

If a content of the microcapsule pigment is less than 5%, an effect inherent in the microcapsule pigment having the characteristic described above is not exerted, and on the other hand, if the content exceeds 50%, the viscosity is increased, so that the ink is reduced in fluidity in a certain case. Accordingly, the content is not preferred.

A colorant and a water-soluble solvent which are conventionally used in addition to the microcapsule pigment having the characteristic described above are added to the aqueous ink composition for writing instruments according to the present invention.

A water-soluble dye, and a pigment, for example, an inorganic pigment, an organic pigment, a plastic pigment, hollow resin particles having voids in the inside of the particles as a white pigment, resin particles (pseudo resins) dyed with a basic dye which are excellent in a color developability and dispersibility, and the like in a range in which the effects of the present invention are not damaged can be used in a suitable amount as the colorant which can be used.

Any of direct dyes, acidic dyes, edible dyes and basic dyes can be used as the water-soluble dye in a suitable amount as long as the effects of the present invention are not damaged.

Capable of being used alone or in a mixture as the water-soluble solvent which can be used are, for example, glycols such as ethylene glycol, diethylene glycol, triethylene glycol, propylene glycol, polyethylene glycol, 1,3-butylene glycol, thiodiethylene glycol, and glycerin, and ethylene glycol monomethyl ether, diethylene glycol monomethyl ether, and the like. A content of the water-soluble solvent described above is preferably 5 to 40% based on a total amount of the aqueous ink composition for writing instruments.

The aqueous ink composition for writing instruments according to the present invention can suitably contain, in addition to the microcapsule pigment having the characteristic described above, a colorant other than the above microcapsule pigment and the water-soluble solvent, water (city water, refined water, distilled water, ion-exchanged water, purified water, and the like) which is a solvent as the balance, and in addition thereto, a dispersant, a lubricant, a pH modifier, a rust preventive, a preservative or a fungicide, a thickener and the like as long as the effects of the present invention are not damaged.

Nonionic and anionic surfactants and water-soluble resins are used as the dispersant which can be used. The water-soluble polymers are preferably used.

The lubricant includes nonionic compounds such as fatty acid esters of polyhydric alcohols which are used as well for surface treatment of pigments, higher fatty acid esters of sugars, polyoxyalkylene higher fatty acid esters, alkylphosphate esters and the like, anionic compounds such as alkylsulfonate salts of higher fatty acid amides, and alkylallylsulfonate salts, derivatives of polyalkylene glycols and fluorine base surfactants, polyether-modified silicones, and the like.

The pH modifier includes ammonia, urea, monoethanolamine, diethanolamine, triethanolamine, alkali metal salts of carbonic acid and phosphoric acid such as sodium tripolyphosphate, and sodium carbonate, hydrates of alkali metals such as sodium hydroxide. Also, the rust preventive includes benzotriazole, tolyltriazole, cyclohexylamonium nitrite, saponins, and the like, and the preservative or the fungicide includes phenol, sodium omadine, sodium benzoate, benzimidazole base compounds and the like.

The thickener includes carboxymethyl cellulose (CMC) or salts thereof, fermented celluloses, crystalline celluloses, polysaccharides and the like. The polysaccharides which can be used includes, for example, xanthan gum, guar gum, hydroxypropylated guar gum, casein, gum arabic, gelatin, amylose, agarose, agropectin, arabinose, curdlan, callose, carboxymethyl starch, chitin, chitosan, quinceseed, glucomannan, gellan gum, tamarind seed gum, dextran, nigueran, hyaluronic acid, pusturan, funoran, HM pectin, porphyran, laminaran, lichenan, carrageenan, alginic acid, tragacanth gum, alcacy gum, succinoglycan, locust bean gum, tara gum, and the like. Polysaccharides may be used alone or in combination of two or more kinds thereof. Also, if polysaccharides are commercially available, polysaccharides can be used.

The aqueous ink composition for writing instruments according to the present invention can be prepared by combining suitably the microcapsule pigment having the characteristic described above, the water-soluble solvent, the other respective components according to the uses of inks for writing instruments (ballpoint pens, marking pens and the like), stirring and mixing them by means of a stirring device such as a homo mixer, a homogenizer, and a disperser, and subjecting the compositions obtained to, for example, filtration and centrifugal separation to remove coarse particles contained in the ink compositions.

An aqueous ink ballpoint pen can be prepared by charging an aqueous ink ballpoint pen body equipped with a ball having a diameter of 0.18 to 2.0 mm with the aqueous ink composition for writing instruments described above.

The aqueous ink ballpoint pen body used shall not specifically be restricted as long as the aqueous ink ballpoint pen body is equipped with a ball having a diameter falling in the range described above, and particularly preferred is a pen body finished to an aqueous ink ballpoint pen of a refill in which the aqueous ink composition described above is filled in an ink receiving tube of a polypropylene tube and in which a stainless tip (equipped with a cemented carbide-made ball) is mounted at a tip.

The aqueous ink composition for writing instruments according to the present invention can be produced by a method which is not specifically different from other production methods for aqueous ink compositions.

That is, the aqueous ink composition for writing instruments (for example, inks for aqueous ink ballpoint pens) according to the present invention can be produced by stirring and mixing the respective components including the microcapsule pigment having the characteristic described above and the like on stirring conditions set to suitable ones by means of a mixer and the like, for example, a bead mill, a homo mixer, a homogenizer and the like by which strong shearing can be applied.

Also, a pH (25°C) of the aqueous ink composition for writing instruments according to the present invention is controlled to preferably 5 to 10, more preferably 6 to 9.5 by the pH modifier and the like from the viewpoints of the usability, the safety, stability of the ink itself and the matching property with the ink reservoir.

The aqueous ink composition for writing instruments according to the present invention is loaded in a ballpoint pen, a marking pen and the like equipped with a pen tip part such as a ballpoint pen tip, a fiber tip, a felt tip, and a plastic tip.

The ballpoint pen in the present invention includes ones in which the aqueous ink composition for writing instruments having the composition described above is stored in an ink reservoir (refill) for a ballpoint pen and in which a substance having no compatibility with the aqueous ink composition received in the above ink reservoir and having a smaller specific gravity than that of the aqueous ink composition, for example, polybutene, a silicone oil, a mineral oil and the like is mounted in the above ink reservoir.

The structures of the ballpoint pen and the marking pen shall not specifically be restricted, and the ballpoint pen and the marking pen may be the ballpoint pen and the marking pen of a free ink type provided with a collector structure (ink holding mechanism) in which a barrel itself is an ink reservoir and in which the aqueous ink composition for writing instruments having the constitution described above is filled in the above barrel.

The microcapsule pigment having the characteristic described above is blended in the aqueous ink composition for writing instruments according to the present invention constituted in the manner described above, and therefore obtained is the aqueous ink composition containing the microcapsule pigment, though the microcapsule pigment is a microcapsule pigment obtained by microcapsulating a pigment having a large specific gravity such as titanium oxide and carbon black having a little difficulty in dispersibility, which makes it easier to be improved in dispersibility and which makes it possible to control a specific gravity and a particle diameter as desired. Accordingly, the above microcapsule pigment can suitably be used as the colorant used for the aqueous ink composition for writing instruments, and the aqueous ink composition which meets the object can be obtained by suitably combining the respective blend components for a marking pen and a ballpoint pen and controlling a specific gravity and a particle diameter.

Because the microcapsule pigment used is constituted so that the component constituting the shell is reduced in a density toward the center, the microcapsule pigment of an intense color can be obtained, and because aliphatic carboxylate ester is used as the poorly water-soluble medium having a specific gravity of less than 1 at 20°C in the microcapsule pigment, the microcapsule pigment tends to be sharp in a particle size distribution (Mv/Mn) and is enhanced in a color developability. Further, the pigment is aligned on the outside of the microcapsule particles, and the pigment is present in the vicinity of the surface of the microcapsule particles, so that the aqueous ink composition for writing instruments containing the microcapsule pigment comprising the particles having an intenser color can be prepared. Further, obtained is the aqueous ink composition for writing instruments containing the microcapsule pigment which makes it possible to be further enhanced in a color developability and further elevated in a whiteness by making the particle shape spherical and forming concave and convex on the surface.

### EXAMPLES

Next, the present invention shall be explained in further details with reference to examples and comparative examples, but the present invention shall not be restricted to the following examples. Hereinafter, "part" in the following production examples means "part by mass".

The respective microcapsule pigments were obtained in the following Examples 1 to 8 and Comparative Examples 1 to 2.

### [Example 1]

Titanium oxide 2.4 parts was added and sufficiently dispersed into heated myristyl myristate (specific gravity: 0.84) 9.6 parts as an oil phase solution at 60°C. Next, 9 parts of a trimethylolpropane (1 molar) adduct of methylenediphenyl-4,4'-diisocyanate (3 molar) (D-109, manufactured by Mitsui Chemicals, Inc.) was added thereto, and 2 parts of ethylene glycol monobenzyl ether was further added.

Polyvinyl alcohol (PVA-205, manufactured by Kurary Co., Ltd.) 15 parts was dissolved in 600 parts of distilled water to prepare an aqueous phase solution, and the oil phase solution described above was added thereto, followed by mixing and emulsifying the aqueous phase solution and the oil phase solution by a homogenizer to finish polymerization.

The dispersion thus obtained was centrifuged to thereby recover the microcapsules and obtain the microcapsule pigment. The particle size distribution (Mv/Mn) was 3.8, and the volume average particle diameter (Mv) was 0.8 µm.

### [Example 2]

Carbon black 1.8 part was added and sufficiently dispersed while heating stearyl stearate (specific gravity: 0.83) 9.6 parts as an oil phase solution at 80°C. Next, 9 parts of an isocyanate pre-polymer (Takenate D-110N, manufactured by Mitsui Chemicals, Inc.), and 2 parts of ethylene glycol monobenzyl ether was further added.

Polyvinyl alcohol (PVA-205, manufactured by Kurary Co., Ltd.) 15 parts was dissolved in 600 parts of distilled water to prepare an aqueous phase solution, and the oil phase solution described above was added thereto, followed by further adding 6 parts of hexamethylenediamine and then mixing and emulsifying the aqueous phase solution and the oil phase solution by a homogenizer to finish polymerization.

The dispersion thus obtained was centrifuged to thereby recover the microcapsules and obtain the microcapsule pigment. The particle size distribution (Mv/Mn) was 2.9, and the volume average particle diameter (Mv) was 1.2 µm.

### [Example 3]

The microcapsule pigment was obtained according to the same procedure as in Example 1, except that myristyl myristate was substituted with methyl laurate (specific gravity: 0.87). The particle size distribution (Mv/Mn) was 4.6, and the volume average particle diameter (Mv) was 1.5 µm.

### [Example 4]

The microcapsule pigment was obtained according to the same procedure as in Example 2, except that stearyl stearate was substituted with 2-ethylhexyl palmitate (specific gravity: 0.86). The particle size distribution (Mv/Mn) was 3.8, and the volume average particle diameter (Mv) was 1.7 µm.

### [Example 5]

The microcapsule pigment was obtained according to the same procedure as in Example 1, except that myristyl myristate was substituted with octyl myristate (specific gravity: 0.86). The particle size distribution (Mv/Mn) was 2.7, and the volume average particle diameter (Mv) was 1.1 um.

### [Example 6]

The microcapsule pigment was obtained according to the same procedure as in Example 2, except that stearyl stearate was substituted with butyl stearate (specific gravity: 0.86). The particle size distribution (Mv/Mn) was 3.2, and the volume average particle diameter (Mv) was 0.9 µm.

### [Example 7] (reference example)

The microcapsule pigment was obtained according to the same procedure as in Example 1, except that myristyl myristate was substituted with diisobutyl ketone (specific gravity: 0.81). The particle size distribution (Mv/Mn) was 7.5, and the volume average particle diameter (Mv) was 1.3 µm.

### [Example 8] (reference example)

The microcapsule pigment was obtained according to the same procedure as in Example 2, except that stearyl stearate was substituted with diisobutyl ketone (specific gravity: 0.81). The particle size distribution (Mv/Mn) was 6.9, and the volume average particle diameter (Mv) was 0.8 µm.

### [Comparative Example 1]

The microcapsule pigment was obtained according to the same procedure as in Example 1, except that myristyl myristate was substituted with butyl benzoate (specific gravity: 1.005). The particle size distribution (Mv/Mn) was 12.4, and the volume average particle diameter (Mv) was 1.3 µm.

### [Comparative Example 2]

The microcapsule pigment was obtained according to the same procedure as in Example 2, except that stearyl stearate was substituted with benzyl acetate (specific gravity: 1.06). The particle size distribution (Mv/Mn) was 8.3, and the volume average particle diameter (Mv) was 0.9 µm.

The respective microcapsule pigments prepared in Examples 1 to 8 and Comparative Examples 1 to 2 were used to evaluate an aging stability, a particle cross-sectional shape, a particle surface shape and a color intensity by the following respective evaluation methods. The results thereof are shown in the following Table 1.

Evaluation method of aging stability of microcapsule pigment:
The respective microcapsule pigments obtained were stored at 25°C for 3 months in the form of a 10 mass% aqueous dispersion, and then the aging stability (settling property) thereof was evaluated according to the following evaluation criteria. Evaluation criteria:
○: no change from the initial stage
△: thin layer is confirmed on upper part of bulk
×: clear separation is confirmed

Evaluation method of particle cross-sectional shape:
The microcapsule pigments obtained were cut to observe cut surfaces thereof under a scanning electron microscope (SEM). It was confirmed whether or not an interfacial surface between the core and the shell was distinctly present and whether or not the density of the shell was gradually decreased toward the center.

### Evaluation method of particle surface shape:

The surface shape of the microcapsule pigments obtained was observed under a scanning electron microscope (SEM).

Evaluation method of color intensity:
The microcapsule pigments prepared in Examples 3, 5 and 7 and Comparative Example 1 were compared with that prepared in Example 1 to evaluate the luminosity, wherein the luminosity equivalent to that in Example 1 was ranked to o, and the luminosity lower than that in Example 1 was ranked to △. Similarly, the microcapsule pigments prepared in Examples 4, 6 and 8 and Comparative Example 2 were compared with that prepared in Example 2 to evaluate the luminosity, wherein the luminosity equivalent to that in Example 2 was ranked to o, and the luminosity higher than that in Example 2 was ranked to △.

### [Examples 9 to 18 and Comparative Examples 3 to 4]

The respective microcapsule pigments obtained in Examples 1 to 8 and Comparative Examples 1 to 2 each described above were used to prepare the respective aqueous ink compositions for writing instruments according to compositions shown in the following Table 2 by an ordinary method. The pH values of the respective aqueous ink compositions for writing instruments at a room temperature (25°C) were measured by means of a pH measuring meter (manufactured by HORIBA, Ltd.) to find that pH values fell in a range of 7.9 to 8.2.

The aqueous ink compositions for writing instruments obtained in Examples 9 to 18 and Comparative Examples 3 to 4 each described above were used to prepare aqueous ink ballpoint pens according to the following method and evaluate an aging stability thereof by the following evaluation method. The results thereof are shown in the following Table 2. Also, the respective evaluations of the particle cross-sectional shape, the particle surface shape and the color intensity shown in Table 1 are shown together in Table 2.

### (Preparation of aqueous ink ballpoint pens)

The respective ink compositions obtained above were used to prepare aqueous ink ballpoint pens. To be specific, a holder of a ballpoint pen (trade name: Signo UM-100, manufactured by Mitsubishi Pencil Co., Ltd.) was used to fill the respective aqueous inks described above in a refill comprising a polypropylene-made ink reservoir having an inner diameter of 4.0 mm and a length of 113 mm, a stainless steelmade tip (cemented carbide ball, ball diameter: 0.7 mm) and a joint for connecting the above reservoir and the above tip; and an ink follower comprising a mineral oil as a main component was arranged at a rear end of the ink to prepare aqueous ink ballpoint pens.

### (Evaluation method of aging stability of aqueous ink compositions for writing instruments)

The respective aqueous ink compositions for writing instruments prepared in Examples 9 to 18 and Comparative Examples 3 to 4 were filled in the ballpoint pen having the constitution described above and stored at 50°C for 3 months with the pen tip turned upward and downward. The respective pen bodies were used to write on a commercial PPC paper to evaluate the aging stability according to the following evaluation criteria.

### Evaluation criteria:

○: no difference is observed between the pen bodies stored with the pen tip turned upward and downward
△: an intensity of lines drawn by the pen body stored with the pen tip turned upward is slightly light as compared with an intensity of lines drawn by the pen body stored with the pen tip turned downward
×: distinct difference is observed in an intensity between lines drawn by the pen bodies stored with the pen tip turned upward and downward

**Table 1**

| [Microcapsule pigment] | | | | | | | | | | |
|---|---|---|---|---|---|---|---|---|---|---|
| | Example | | | | | | | | Comparative Example | |
| | 1 | 2 | 3 | 4 | 5 | 6 | 7 | 8 | 1 | 2 |
| Aging stability | ○ | ○ | ○ | ○ | ○ | ○ | ○ | ○ | × | × |
| Cross-sectional shape of particles | borderless | borderless | borderless | borderless | borderless | borderless | having border | having border | having border | having border |
| Spherical shape of particles | concave & convex | smooth | concave & convex | smooth | concave & convex | smooth | concave & convex | smooth | concave & convex | smooth |
| Color intensity | ○ | ○ | ○ | ○ | ○ | ○ | Δ | Δ | Δ | Δ |

### Examples 7 and 8 are reference examples

**Table 2**

| [Aqueous ink composition for writing instrument] | | | | | (Total: 100% by mass) | | | |
|---|---|---|---|---|---|---|---|---|
| | | | Example | | | | | |
| | | | 9 | 10 | 11 | 12 | 13 | 14 |
| Microcapsule pigment (Table 1) | Example 1 | | 15 | | | | | |
| | Example 2 | | | 15 | | | | |
| | Example 3 | | | | 15 | | | |
| | Example 4 | | | | | 15 | | |
| | Example 5 | | | | | | 15 | |
| | Example 6 | | | | | | | 15 |
| | Example 7 | | | | | | | |
| | Example 8 | | | | | | | |
| | Comparative Example 1 | | | | | | | |
| | Comparative Example 2 | | | | | | | |
| Amine | Triethanolamine | | 0.1 | 0.1 | 0.1 | 0.1 | 0.1 | 0.1 |
| Thickener | Xanthan gum | *1 | 0.3 | 0.3 | 0.3 | 0.3 | 0.3 | 0.3 |
| Antirust | Benzotriazole | | 0.3 | 0.3 | 0.3 | 0.3 | 0.3 | 0.3 |
| Preservative | Benzoisothiazolin | *2 | 0.3 | 0.3 | 0.3 | 0.3 | 0.3 | 0.3 |
| Lubricant | Phosphate ester | *3 | 0.3 | 0.3 | 0.3 | 0.3 | 0.3 | 0.3 |
| Solvent | Glycerine | | 10 | 10 | 10 | 10 | 10 | 10 |
| Water | Purified water | | 73.7 | 73.7 | 73.7 | 73.7 | 73.7 | 73.7 |
| Cross-sectional shape of microcapsule pigment particles | | | borderless | borderless | borderless | borderless | borderless | borderless |
| Spherical shape of microcapsule pigment particles | | | concave & convex | smooth | concave & convex | smooth | concave & convex | smooth |
| Color intensity of microcapsule pigment particles | | | ○ | ○ | ○ | ○ | ○ | ○ |
| Aging stability | | | ○ | ○ | ○ | ○ | ○ | ○ |

**Table 2 (continued)**

| | | | Example | | | | Comparative Example | |
|---|---|---|---|---|---|---|---|---|
| | | | 15 | 16 | 17 | 18 | 3 | 4 |
| Microcapsule pigment (Table 1) | Example 1 | | 15 | | | | | |
| | Example 2 | | | 15 | | | | |
| | Example 3 | | | | | | | |
| | Example 4 | | | | | | | |
| | Example5 | | | | | | | |
| | Example 6 | | | | | | | |
| | Example 7 | | | | 15 | | | |
| | Example 8 | | | | | 15 | | |
| | Comparative Example 1 | | | | | | 15 | |
| | Comparative Example 2 | | | | | | | 15 |
| Amine | Triethanolamine | | 0.1 | 0.1 | 0.1 | 0.1 | 0.1 | 0.1 |
| Thickener | Xanthan gum | | | | 0.3 | 0.3 | 0.3 | 0.3 |
| Antirust | Benzotriazole | | 0.3 | 0.3 | 0.3 | 0.3 | 0.3 | 0.3 |
| Preservative | Benzoisothiazolin | | 0.3 | 0.3 | 0.3 | 0.3 | 0.3 | 0.3 |
| Lubricant | Phosphate ester | | 0.3 | 0.3 | 0.3 | 0.3 | 0.3 | 0.3 |
| Solvent | Glycerine | | 10 | 10 | 10 | 10 | 10 | 10 |
| Water | Purified water | | 74 | 74 | 73.7 | 73.7 | 73.7 | 73.7 |
| Cross-sectional shape of microcapsule pigment particles | | | borderless | borderless | having border | having border | having border | having border |
| Spherical shape of microcapsule pigment particles | | | concave & convex | smooth | concave & convex | smooth | concave & convex | smooth |
| Color intensity of microcapsule pigment particles | | | ○ | ○ | Δ | Δ | Δ | Δ |
| Aging stability | | | ○ | ○ | Δ | Δ | × | × |

| | | | | | | | | |
|---|---|---|---|---|---|---|---|---|
| Examples 17 and 18 are reference examples *1: KELZAN S (manufactured by Sansho Co., Ltd.) *2: Bioden 421 (manufactured by Daiwa Chemical Industries Co., Ltd.) *3: RD-510Y (manufactured by Toho Chemical Industry Co., Ltd.) | | | | | | | | |

As apparent from results shown in Table 1 described above, it has become clear that the respective microcapsule pigments prepared in Examples 1 to 8 falling in the scope of the present invention are excellent in aging stability (settling resistance) as compared with aging stability prepared in Comparative Examples 1 to 2 out of scope of the present invention.

Also, microcapsule pigments prepared in Examples 1 to 6 were obtained by using aliphatic carboxylate esters as the poorly water-soluble medium having a specific gravity of less than 1 at 20°C, and it has been found that microcapsule pigments are narrower in a particle size distribution (Mv/Mn) and improved more in a color developability to provide the drawn lines with an intenser color than microcapsule pigments prepared in Examples 7 and 8 which were obtained by using the poorly water-soluble medium (diisobutyl ketone, specific gravity: 0.81) other than the aliphatic carboxylate esters. Thus, Examples 7 and 8 are not according to claim 1 and are consequently reference examples. Also, as apparent from results shown in Table 2 described above, it has become clear that aqueous ink compositions for writing instruments prepared in Examples 9 to 18 which were obtained by using respective microcapsule pigments prepared in Examples 1 to 8 falling in the scope of the present invention and which were applied to an aqueous ink ballpoint pen are excellent in an aging stability as compared with the aqueous ink compositions for writing instruments prepared in Comparative Examples 3 to 4 which were obtained by using respective microcapsule pigments prepared in Comparative Examples 1 to 2 out of scope of the present invention and which were applied to an aqueous ink ballpoint pen.

### INDUSTRIAL APPLICABILITY

Obtained are a microcapsule pigment suitably used as a colorant for thermosensitive recording materials, inks for writing instruments, inks for stamps, inks for ink jet, inks for printing and the like, and an aqueous ink composition for writing instruments which is prepared by using the same and which is suitable for ballpoint pens, marking pens and the like.

## Claims

1. A microcapsule pigment involving a pigment and a medium in a shell which is obtainable by microencapsulating at least:
a pigment; and
a poorly water-soluble medium having a specific gravity of less than 1 at 20°C, wherein the poorly water-soluble medium is an aliphatic carboxylate ester,
wherein
the particle shape of the microcapsule pigment is spherical and is smooth or concave and convex on the surface; and
a component constituting the shell is reduced in density toward the center.

2. The microcapsule pigment as described in claim 1, wherein the medium is an ester obtained from a fatty acid selected from lauric acid, myristic acid, palmitic acid, stearic acid, and arachic acid, and an alcohol selected from methyl alcohol, isopropyl alcohol, isobutyl alcohol, myristyl alcohol, cetyl alcohol, stearyl alcohol, and eicosanyl alcohol.

3. The microcapsule pigment as described in claim 1 or 2, wherein the particle size distribution (Mv/Mn) of the microcapsule pigment, as measured by means of a particle size distribution analyzer, is in the range of 1 to 8.

4. The microcapsule pigment as described in any one of claims 1 to 3, wherein a shell component constituting the microcapsule is at least one selected from the group consisting of urethane, urea and ureaurethane.

5. An aqueous ink composition for writing instruments containing the microcapsule pigment as described in any one of claims 1 to 4.

## Patentansprüche

1. Ein Mikrokapselpigment, das ein Pigment und ein Medium in einer Hülle beinhaltet, erhältlich durch Mikroverkapseln von mindestens:
einem Pigment; und
einem schlecht wasserlöslichen Medium mit einer spezifischen Dichte von weniger als 1 bei 20 °C, wobei das schlecht wasserlösliche Medium ein aliphatischer Carbonsäureester ist,
wobei
die Teilchenform des Mikrokapselpigments sphärisch ist und glatt oder konkav und konvex auf der Oberfläche ist; und
eine Komponente, die die Hülle bildet, in Richtung Mitte an Dichte abnimmt.

2. Das Mikrokapselpigment wie in Anspruch 1 beschrieben, wobei das Medium ein Ester ist, erhalten aus einer Fettsäure, ausgewählt aus Laurinsäure, Myristinsäure, Palmitinsäure, Stearinsäure und Arachinsäure, und einem Alkohol, ausgewählt aus Methylalkohol, Isopropylalkohol, Isobutylalkohol, Myristylalkohol, Cetylalkohol, Stearylalkohol und Eicosanylalkohol.

3. Das Mikrokapselpigment wie in Anspruch 1 oder 2 beschrieben, wobei die Teilchengrößenverteilung (Mv/Mn) des Mikrokapselpigments, wie gemessen mit einem Apparat zur Bestimmung der Teilchengrößenverteilung, im Bereich von 1 bis 8 liegt.

4. Das Mikrokapselpigment wie in einem der Ansprüche 1 bis 3 beschrieben, wobei eine die Mikrokapsel bildende Hüllenkomponente mindestens eine, ausgewählt aus der Gruppe bestehend aus Urethan, Harnstoff und Harnstoff-Urethan, ist.

5. Eine wässrige Tintenzusammensetzung für Schreibutensilien, enthaltend das Mikrokapselpigment wie in einem der Ansprüche 1 bis 4 beschrieben.

## Revendications

1. Pigment en microcapsule impliquant un pigment et un milieu dans une coque qui est apte à être obtenu par la microencapsulation d'au moins :
un pigment ; et
un milieu faiblement hydrosoluble ayant une densité spécifique de moins de 1 à 20 °C, dans lequel le milieu faiblement hydrosoluble est un ester carboxylate aliphatique,
dans lequel
la forme particulaire du pigment en microcapsule est sphérique et est lisse ou concave et convexe sur la surface ; et
un composant constituant la coque est réduit en densité vers le centre.

2. Pigment en microcapsule selon la revendication 1, dans lequel le milieu est un ester obtenu à partir d'un acide gras sélectionné parmi l'acide laurique, l'acide myristique, l'acide palmitique, l'acide stéarique et l'acide arachique, et d'un alcool sélectionné parmi l'alcool méthylique, l'alcool isopropylique, l'alcool isobutylique, l'alcool myristylique, l'alcool cétylique, l'alcool stéarylique et l'alcool eicosanylique.

3. Pigment en microcapsule selon la revendication 1 ou 2, dans lequel la distribution granulométrique (Mv/Mn) du pigment en microcapsule, telle que mesurée au moyen d'un analyseur de distribution granulométrique, est dans la plage de 1 à 8.

4. Pigment en microcapsule selon l'une quelconque des revendications 1 à 3, dans lequel un composant de coque constituant la microcapsule est au moins l'un sélectionné parmi le groupe constitué de l'uréthane, de l'urée et de l'urée-uréthane.

5. Composition d'encre aqueuse pour instruments d'écriture contenant le pigment en microcapsule selon l'une quelconque des revendications 1 à 4.
